(19) Europäisches Patentamt

European Patent Office

Office européen des brevets

(11) Veröffentlichungsnummer: **0 492 376 B1**

(12) **EUROPÄISCHE PATENTSCHRIFT**

(45) Veröffentlichungstag der Patentschrift: **01.03.95**

(21) Anmeldenummer: **91121652.1**

(22) Anmeldetag: **17.12.91**

(51) Int. Cl.⁶: **C08F 283/12**

(54) Elastomere Pfropfcopolymerisate mit Kern-Hülle-Struktur.

(30) Priorität: **20.12.90 DE 4040986**

(43) Veröffentlichungstag der Anmeldung:
**01.07.92 Patentblatt 92/27**

(45) Bekanntmachung des Hinweises auf die
Patenterteilung:
**01.03.95 Patentblatt 95/09**

(84) Benannte Vertragsstaaten:
**BE DE ES FR GB IT NL**

(56) Entgegenhaltungen:
**US-A- 4 859 740**
**US-A- 4 861 831**

(73) Patentinhaber: **WACKER-CHEMIE GMBH**
**Hanns-Seidel-Platz 4**
**D-81737 München (DE)**

(72) Erfinder: **Mautner, Konrad, Dr.**
**Eibenweg 14**
**W-8269 Burgkirchen (DE)**
Erfinder: **Deubzer, Bernward, Dr.**
**Virchowstrasse 14**
**W-8263 Burghausen (DE)**

**Beschreibung**

Die Erfindung betrifft elastomere Pfropfcopolymerisate mit Kern-Hülle-Struktur zusammengesetzt aus einem Kern a) bestehend aus einem siliciumorganischen Polymer und einer organopolymeren Hülle c) oder zwei Hüllen b) und c), wobei die innere Hülle b) aus einem siliciumorganischen Polymer besteht und die Polymerisate eine definierte Teilchengröße und eine monomodale Teilchengrößenverteilung aufweisen.

Pfropfcopolymerisate mit Kern-Hülle-Struktur zusammengesetzt aus einem siliciumorganischem Polymeranteil und einem organischen Polymeranteil sind aus einer Reihe von Publikationen bekannt.

Aus der DE-B 1595554 (US-A 3,445,415) ist ein Verfahren zur Herstellung von wäßrigen Pfropfcopolymerlatices bekannt, wobei monoolefinisch ungesättigte Monomere auf Organosiloxanpolymerisate von Einheiten der allgemeinen Formel $RSiO_{3/2}$ aufgepfropft werden. Nachteilig bei diesem Verfahren ist, daß sich damit lediglich harte Polymerisate und nicht Pfropfcopolymerisate mit elastomeren Eigenschaften herstellen lassen.

Die DE-B 2421288 (US-A 3,898,300) beschreibt eine Verfahrensweise zur Herstellung von Pfropfcopolymeren, wobei Styrol und weitere monoethylenisch ungesättigte Verbindungen auf eine Polyorganosiloxan-Pfropfgrundlage aufgepfropft werden. Hierzu werden Gemische von Polyorganosiloxanen oder Gemische von Polyorganosiloxanen und Organosiloxanen in Emulsion vorgelegt, mit einer Homogenisiereinrichtung homogenisiert und anschließend mit den organischen Monomeren gepfropft. Mit dieser überdies aufwendigen Verfahrensweise sind nur polydisperse Pfropfcopolymerdispersionen mit weiter Teilchengrößenverteilung zugänglich. Die Herstellung von Pfropfcopolymerisaten mit einer monomodalen Teilchengrößenverteilung und mit Teilchengrößen < 0.1 $\mu$m ist mit diesem Verfahren nicht möglich.

Pfropfcopolymerisate aus nicht näher definiertem Organopolysiloxan bzw. Silikonkautschuk und Vinyl- bzw. Acrylmonomeren werden in der DE-A 2539572 beschrieben. Zur Polymerisation wird mit schnellaufenden Rührwerken gerührt. Man erhält ein polydiperses Produkt mit Teilchengrößen zwischen 1 und 3 mm.

In der DE-A 3629763 (EP-A 258746) werden Silikonkautschuk-Pfropfcopolymerisate mit Vinyl- bzw. Acrylmonomeren beschrieben, wobei die Silikonkautschuk-Phase zumindest teilvernetzt sein soll. Obwohl zur Herstellung der Pfropfgrundlage der Ansatz bereits homogenisiert wird, beträgt die Teilchengröße der Pfropfgrundlage bereits 300 nm. Die Homogenisierung führt zu einer polydispersen Teilchengrößenverteilung

Gegenstand der EP-A 254418 sind unter anderem Silikonpfropfcopolymerisate welche durch Aufpfropfen von Acrylaten auf in Dispersion vorliegende Silikonelastomere erhalten werden. Die Teilchengröße der auf diese Weise erhältlichen Pfropfcopolymeren beträgt 0.14 $\mu$m. Monomodale Pfropfcopolymerisate werden nicht beschrieben.

Die EP-A 231776 beschreibt eine Mischung aus Polyester und Polysiloxanpfropfcopolymer. Die Herstellung des Polysiloxans erfolgt durch Emulsionspolymerisation der monomeren Silane nach vorhergehender Homogenisierung mit Ultraturrax bzw. Homogenisator. Anschließend wird die Polysiloxan-Pfropfgrundlage mit Vinylmonomer gepfropft. Nach der gleichen Methode werden die in der US-A 4,690,986 beschriebenen Polyorganosiloxan-Pfropfcopolymerisate hergestellt. Die Partikelgröße der Pfropfcopolymerisate beträgt in den Beispielen 300 nm; aufgrund der Homogenisierung erhält man eine polydisperse Teilchengrößenverteilung.

Teilchenförmige Pfropfcopolymerisate mit Kern-Schale-Struktur, welche Polysiloxane bzw. Silikone enthalten und mehr als eine Schale aufweisen, werden in der DE-A 3617267 (EP-A 246537), DE-A 3631539 (US-A 4,812,515), EP-A 296402 (US-A 4,865,917) und in der EP-A 296403 (US-A 4,885,209) beschrieben. Die Herstellung der Siloxan- bzw. Silikonkautschuk-Pfropfgrundlage erfolgt in allen Fällen nach einem Homogenisierungsschritt, was eine polydisperse Teilchengrößenverteilung zur Folge hat.

Die DE-A 3617267 und DE-A 3631539 beschreiben ein Pfropfcopolymerisat mit einem Silikonkautschuk-Kern, einer ersten Hülle aus Acrylatkautschuk und einer aufgepfropften Hülle aus monoethylenisch ungesättigten Monomeren.

Gegenstand der EP-A 296402 und EP-A 296403 sind Silikonkautschuk-Pfropfcopolymerisate bestehend aus einem kautschukartigen Organopolymer-Kern mit einer Hülle aus Organopolysiloxan, worauf ethylenisch ungesättigte Monomere aufgepfropft sind.

Vor diesem technologischen Hintergrund bestand die Aufgabe feinteilige elastomere Pfropfcopolymerisate mit monomodaler Teilchengrößenverteilung auf der Basis von siliciumorganischen und organischen Polymeren zur Verfügung zu stellen. Diese Pfropfcopolymerisate sollten über ein Verfahren zugänglich sein, welches keine aufwendigen mechanischen Emulgier- und Homogenisierschritte beinhaltet, mittels dessen die Teilchengröße ohne Verwendung von zusätzlichem Emulgator beeinflußbar ist und bei dem die Pfropfung, auch ohne funktionellen Silananteil im Kern, in ausreichendem Anteil erfolgt.

2

EP 0 492 376 B1

Gegenstand der Erfindung sind elastomere teilchenförmige Copolymerisate mit Kern-Hülle-Struktur zusammengesetzt aus einem Kern a) bestehend aus einem siliciumorganischen Polymer und einer organopolymeren Hülle c) oder zwei Hüllen b) und c), wobei die innere Hülle b) aus einem siliciumorganischen Polymer besteht, dadurch gekennzeichnet, daß das Copolymerisat zusammengesetzt ist aus

a) 0.05 bis 95 Gew%, bezogen auf das Gesamtgewicht des Copolymerisats, eines Kernpolymeren der allgemeinen Formel $(R_2SiO_{2/2})_x \bullet (RSiO_{3/2})_y \bullet (SiO_{4/2})_z$ mit $x = 0$ bis 99.5 Mol%, $y = 0.5$ bis 100 Mol%, $z = 0$ bis 50 Mol%,

b) 0 bis 94.5 Gew%, bezogen auf das Gesamtgewicht des Copolymerisats, einer Polydialkylsiloxan-Hülle aus $(R_2SiO_{2/2})$-Einheiten und

c) 5 bis 95 Gew%, bezogen auf das Gesamtgewicht des Copolymerisats, einer Hülle aus Organopolymer monoolefinisch ungesättigter Monomere,

wobei R gleiche oder verschiedene einwertige Alkyl- oder Alkenyl-Reste mit 1 bis 6 C-Atomen, Aryl-Reste oder substituierte Kohlenwasserstoffreste bedeutet,

und die Teilchen eine Teilchengröße von 10 bis 300 nm und eine monomodale Teilchengrößenverteilung mit einem Polydispersitätsindex von maximal $\sigma_2 = 0.2$ haben.

Teilchenförmigen Copolymerisate bestehend aus einem Kern a) und einer Hülle c) sind vorzugsweise zusammengesetzt aus:

a) 5 bis 95 Gew%, besonders bevorzugt 20 bis 80 Gew%, bezogen auf das Gesamtgewicht des Copolymerisats, eines Kernpolymeren $(R_2SiO_{2/2})_x \bullet (RSiO_{3/2})_y \bullet (SiO_{4/2})_z$ mit $x = 10$ bis 99.5 Mol%, insbesondere 50 bis 99 Mol%; $y = 0.5$ bis 95 Mol%, insbesondere 1 bis 50 Mol%; $z = 0$ bis 30 Mol%, insbesondere 0 bis 20 Mol%; und

c) 5 bis 95 Gew%, besonders bevorzugt 20 bis 80 Gew%, bezogen auf das Gesamtgewicht des Copolymerisats, einer Hülle aus Organopolymer monoolefinisch ungesättigter Monomere,

wobei R gleiche oder verschiedene einwertige Alkyl- oder Alkenyl-Reste mit 1 bis 6 C-Atomen, Aryl-Reste oder substituierte Kohlenwasserstoffreste bedeutet.

Teilchenförmigen Copolymerisate bestehend aus einem Kern a), einer inneren Hülle b) und einer Hülle c) sind vorzugsweise zusammengesetzt aus:

a) 0.05 bis 90 Gew%, besonders bevorzugt 0.1 bis 35 Gew%, bezogen auf das Gesamtgewicht des Copolymerisats, eines Kernpolymeren $(RSiO_{3/2})_y \bullet (SiO_{4/2})_z$ mit $y = 50$ bis 100 Mol% und $z = 0$ bis 50 Mol%, insbesondere 0 bis 30 Mol%,

b) 0.5 bis 94.5 Gew%, besonders bevorzugt 35 bis 70 Gew%, bezogen auf das Gesamtgewicht des Copolymerisats, einer Polydialkylsiloxan-Hülle aus $(R_2SiO_{2/2})_n$-Einheiten

c) 5 bis 95 Gew%, besonders bevorzugt 30 bis 70 Gew%, bezogen auf das Gesamtgewicht des Copolymerisats, einer Hülle aus Organopolymer monoolefinisch ungesättigter Monomere,

wobei R gleiche oder verschiedene einwertige Alkyl- oder Alkenyl-Reste mit 1 bis 6 C-Atomen, Aryl-Reste oder substituierte Kohlenwasserstoffreste bedeutet.

Vorzugsweise sind die Reste R Alkylreste, wie der Methyl-, Ethyl-, n-Propyl-, Isopropyl-, n-Butyl-, sec.-Butyl-, Amyl-, Hexylrest; Alkenylreste, wie der Vinyl- und Allylrest und Butenylrest; Arylreste, wie der Phenylrest; oder substituierte Kohlenwasserstoffreste. Beispiele hierfür sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenylrest; Mercaptoalkylreste, wie der 2-Mercaptoethyl- und 3-Mercaptopropylrest; Cyanoalkylreste, wie der 2- Cyanoethyl- und 3-Cyanopropylrest; Aminoalkylreste, wie der 3-Aminopropylrest; Acyloxyalkylreste, wie der 3-Acryloxypropyl- und 3-Methacryloxypropylrest; Hydroxyalkylreste, wie der Hydroxypropylrest.

Besonders bevorzugt sind die Reste Methyl, Ethyl, Propyl, Phenyl, Vinyl, 3-Methacryloxypropyl und 3-Mercaptopropyl, wobei weniger als 30 Mol% der Reste im Siloxanpolymerisat Vinyl-, 3-Methacryloxypropyl oder 3-Mercaptopropylgruppen sind.

Das siliciumorganische Hüllpolymerisat b) besteht vorzugsweise aus Dialkylsiloxanen-Einheiten $(R_2SiO_{2/2})$, wobei R die Bedeutungen Methyl oder Ethyl hat.

Als Monomere für den organischen Polymeranteil c) werden vorzugsweise Acrylsäureester oder Methacrylsäureester von aliphatischen Alkoholen mit 1 bis 10 C-Atomen, Acrylnitril, Styrol, p-Methylstyrol, $\alpha$-Methylstyrol, Vinylacetat, Vinylpropionat, Maleinimid, Vinylchlorid, Ethylen, Butadien, Isopren und Chloropren. Besonders bevorzugt sind Styrol sowie Acrylsäureester und Methacrylsäureester von aliphatischen Alkoholen mit 1 bis 4 C-Atomen, beispielsweise Methyl(meth)acrylat, Ethyl(meth)acrylat oder Butyl(meth)-acrylat. Als organischer Polymeranteil sind sowohl Homopolymerisate als auch Mischpolymerisate der genannten Monomere geeignet.

Die feinteiligen elastomeren Pfropfcopolymerisate haben eine mittlere Teilchengröße (Durchmesser) von 10 bis 300 nm, vorzugsweise von 30 bis 150 nm, gemessen mit dem Transmissions-Elektronen-Mikroskop.

3

EP 0 492 376 B1

Die Teilchengrößenverteilung ist sehr einheitlich, die Pfropfcopolymerisate liegen monomodal vor, das heißt die Teilchen besitzen ein Maximum in der Teilchengrößenverteilung und einen Polydispersitätsfaktor $\sigma_2$ von maximal 0.2, gemessen mit dem Transmissions-Elektronen-Mikroskop.

Die Herstellung der Polysiloxan-Pfropfgrundlage erfolgt nach dem Emulsionspolymerisationsverfahren durch Zudosieren von 0.05 bis 95 Gew%, bezogen auf das Gesamtgewicht des herzustellenden Pfropfcopolymerisats, eines monomeren Silans des Typs $RSi(OR')_3$ oder Zudosieren eines Gemisches monomerer Silane vom Typ $R_aSi(OR')_{4-a}$, wobei a = 0, 1 oder 2 ist, zu einer bewegten Emulgator/Wasser-Mischung. Der Rest R hat die bereits genannten Bedeutungen. R' steht für Alkylreste mit 1 bis 6 C-Atomen, Arylreste oder substituierte Kohlenwasserstoffreste, bevorzugt sind Methyl-, Ethyl- und Propylrest.

Geeignete Emulgatoren sind Carbonsäuren mit 9 bis 20 C-Atomen, aliphatisch substituierte Benzolsulfonsäuren mit mindestens 6 C-Atomen in den aliphatischen Substituenten, aliphatisch substituierte Naphthalinsulfonsäuren mit mindestens 4 C-Atomen in den aliphatischen Substituenten, aliphatische Sulfonsäuren mit mindestens 6 C-Atomen in den aliphatischen Resten, Silylalkylsulfonsäuren mit mindestens 6 C-Atomen in den Alkylsubstituenten, aliphatisch substituierte Diphenylethersulfonsäuren mit mindestens 6 C-Atomen in den aliphatischen Resten, Alkylhydrogensulfate mit mindestens 6 C-Atomen in den Alkylresten, quarternäre Ammoniumhalogenide oder -hydroxide. Alle genannten Säuren können als solche oder gegebenenfalls im Gemisch mit ihren Salzen verwendet werden. Wenn anionische Emulgatoren eingesetzt werden, ist es vorteilhaft, solche zu verwenden, deren aliphatische Substituenten mindestens 8 C-Atome enthalten. Als anionische Emulgatoren sind aliphatisch substituierte Benzolsulfonsäuren bevorzugt. Wenn kationische Emulgatoren benutzt werden, ist es vorteilhaft, Halogenide einzusetzen. Die einzusetzende Menge an Emulgator beträgt von 0.5 bis 20.0 Gew%, vorzugsweise 1.0 bis 3.0 Gew%, jeweils bezogen auf die eingesetzte Menge an Organosiliciumverbindungen.

Das Silan oder das Silangemisch wird dosiert zugegeben. Die Emulsionspolymerisation wird bei einer Temperatur von 30 bis 90 ° C, vorzugsweise 60 bis 85 ° C, und vorzugsweise bei Normaldruck durchgeführt. Der pH-Wert der Polymerisationsmischung beträgt von 1 bis 4, vorzugsweise von 2 bis 3.

Die Polymerisation zur Herstellung der Pfropfgrundlage kann sowohl in kontinuierlicher Fahrweise als auch diskontinuierlicher Fahrweise durchgeführt werden; vorzugsweise wird sie diskontinuierlich durchgeführt.

Bei kontinuierlicher Fahrweise beträgt die Verweilzeit im Reaktor zwischen 30 und 60 Minuten. Bei diskontinuierlicher Herstellung der Pfropfgrundlage ist es für die Stabilität der Emulsion vorteilhaft nach Ende der Dosierung noch 0.5 bis 5.0 Stunden nachzurühren. Zur weiteren Verbesserung der Stabilität der Polysiloxan-Emulsion wird der bei der Hydrolyse freigesetzte Alkohol, vor allem bei einem hohen Anteil von Silan der allgemeinen Formel $RSi(OR')_3$, in einer bevorzugten Ausführungsform durch Destillation entfernt.

Im ersten Reaktionsschritt besteht die Zusammensetzung der in einer Menge von 0.05 bis 95 Gew%, bezogen auf das Gesamtgewicht des Pfropfcopolymerisats, zu dosierenden Silanphase, mit einer oder mehreren Komponenten, aus 0 bis 99.5 Mol% eines Silans der allgemeinen Formel $R_2Si(OR')_2$ oder eines Oligomeren der Formel $(R_2SiO)_n$ mit n = 3 bis 8, 0.5 bis 100 Mol% eines Silans der allgemeinen Formel $RSi(OR')_3$ und 0 bis 50 Mol% eines Silans der allgemeinen Formel $Si(OR')_4$, wobei sich die Angaben in Mol% jeweils auf die Bruttozusammensetzung der Pfropfgrundlage beziehen.

Zur Herstellung von Pfropfcopolymerisaten bestehend aus einem Kern a) und einer Hülle c) werden im ersten Reaktionsschritt vorzugsweise 10 bis 99.5 Mol%, insbesonders 50 bis 99 Mol% Silane der allgemeinen Formel $R_2Si(OR')_2$ oder eines Oligomeren der Formel $(R_2SiO)_n$ mit n = 3 bis 8, 0.5 bis 90 Mol%, insbesonders 1 bis 50 Mol% Silane der allgemeinen Formel $RSi(OR')_3$ und 0 bis 30 Mol%, insbesonders 0 bis 20 Mol% Silane der allgemeinen Formel $Si(OR')_4$ zudosiert, wobei sich die Angaben in Mol% jeweils auf die Bruttozusammensetzung der Pfropfgrundlage beziehen.

Zur Herstellung von Pfropfcopolymerisaten bestehend aus einem Kern a), einer inneren Hülle b) und einer Hülle c) werden im ersten Reaktionsschritt vorzugsweise 50 bis 100 Mol% Silane der allgemeinen Formel $RSi(OR')_3$ und vorzugsweise 0 bis 50 Mol%, insbesonders 0 bis 30 Mol% Silane der allgemeinen Formel $Si(OR')_4$ zudosiert, wobei sich die Angaben in Mol% jeweils auf die Bruttozusammensetzung der Pfropfgrundlage beziehen.

Beispiele für Silane der allgemeinen Formel $R_2Si(OR')_2$ sind Dimethyldiethoxysilan oder Dimethyldimethoxysilan. Beispiele für Oligomere der Formel $(R_2SiO)_n$ mit n = 3 bis 8 sind Octamethylcyclotetrasiloxan oder Hexamethylcyclotrisiloxan.

Beispiele für Silane der allgemeinen Formel $RSi(OR')_3$ sind Methyltrimethoxysilan, Phenyltriethoxysilan, 3-Chlorpropyltrimethoxysilan, 3-Mercaptopropyltrimethoxysilan, oder Methacryloxypropyltrimethoxysilan.

Beispiele für Silane der allgemeinen Formel $Si(OR')_4$ sind Tetramethoxysilan oder Tetraethoxysilan.

In einer bevorzugten Ausführungsform wird die Pfropfgrundlage vor dem Aufpfropfen der monoethylenisch ungesättigten Monomeren noch mit dem siliciumorganischen Hüllpolymerisat b) gepfropft. Die

4

Herstellung dieser Hülle b) erfolgt ebenfalls nach dem Emulsionspolymerisationsverfahren. Hierzu werden difunktionelle Silane der allgemeinen Formel $R_2Si(OR')_2$ oder niedermolekulare Siloxane der allgemeinen Formel $(R_2SiO_{2/2})_n$ mit n = 3 bis 8 zu der bewegten Emulsion der Pfropfgrundlage zudosiert. Die Reste R und R'haben dabei die bereits genannten Bedeutungen. Vorzugsweise wird kein weiterer Emulgator zugegeben, da die in der Emulsion der Pfropfgrundlage vorhandene Emulgatormenge zur Stabilisierung ausreicht.

Die Polymerisation zur Aufpfropfung der Hülle b) wird bei einer Temperatur von 15 bis 90°C, vorzugsweise 60 bis 85°C und vorzugsweise bei Normaldruck durchgeführt. Der pH-Wert der Polymerisationsmischung beträgt von 1 bis 4, vorzugsweise von 2 bis 3. Auch dieser Reaktionsschritt kann sowohl kontinuierlich als auch diskontinuierlich erfolgen. Die Verweilzeiten im Reaktor bei kontinuierlicher Darstellung, beziehungsweise die Nachrührzeiten im Reaktor bei diskontinuierlicher Darstellung sind abhängig von der Menge zudosierter Silane oder Siloxane und betragen vorzugsweise von 2 bis 6 Stunden. Am zweckmäßigsten ist es, die Reaktionsschritte zur Herstellung der Pfropfgrundlage a) und des Hüllpolymerisats b) in einem geeigneten Reaktor zu kombinieren und gegebenenfalls zum Schluß den gebildeten Alkohol destillativ zu entfernen.

Die difunktionelle Silane der allgemeinen Formel $R_2Si(OR')_2$ oder niedermolekulare Siloxane der allgemeinen Formel $(R_2SiO_{2/2})_n$ mit n = 3 bis 8 werden in einer solchen Menge zudosiert, daß der Anteil an siliciumorganischem Hüllpolymerisat 0.5 bis 94.5 Gew%, vorzugsweise 35 bis 70 Gew%, bezogen auf das Gesamtgewicht des Pfropfcopolymerisats, beträgt.

Der Festgehalt der so hergestellten Siloxanelastomersole sollte, sowohl ohne als auch mit siliciumorganischem Hüllpolymerisat b), maximal 25 Gew% betragen, da sonst ein hoher Anstieg der Viskosität die Weiterverarbeitung der Sole als Pfropfgrundlage erschwert. Aus derartigen Solen durch Koagulation erhältliche Polysiloxane zeigen elastomere Eigenschaften. Eine einfache Methode zur Charakterisierung der Elastizität ist die Bestimmung des Quellfaktors analog der in der US-A 4,775,712 angegebenen Methode. Der Quellfaktor sollte einen Wert > 3 aufweisen.

Im letzten Schritt des Herstellungsverfahrens werden die bereits genannten monoethylenisch ungesättigten Monomere auf die, vorzugsweise mit dem siliciumorganischen Hüllpolymerisat b) gepfropfte, Polysiloxanpfropfgrundlage aufgepfropft. Die organischen Monomere werden dazu in einer Menge zudosiert, die 5 bis 95 Gew%, vorzugsweise 30 bis 70 Gew%, jeweils bezogen auf das Gesamtgewicht des Pfropfcopolymerisats, beträgt. Die Pfropfung erfolgt nach dem Emulsionspolymerisationsverfahren in Gegenwart von wasserlöslichen oder monomerlöslichen Radikalinitiatoren. Geeignete Radikalinitiatoren sind wasserlösliche Peroxoverbindungen, organische Peroxide, Hydroperoxide oder Azoverbindungen. Besonders bevorzugt wird die Redoxkatalyse beispielsweise mit $K_2S_2O_8$ und $KHSO_3$. Oxidations- und Reduktionskomponente werden dabei vorzugsweise in einer Menge von 0.01 bis 2 Gew%, bezogen auf die Monomermenge, eingesetzt.

Die Reaktionstemperaturen sind abhängig von der Art des verwendeten Initiators und betragen von 15 bis 90°C, vorzugsweise 30 bis 85°C. Um besonders bei esterfunktionellen Monomeren die Hydrolyse zu vermeiden, sollte der pH-Wert auf pH 4 bis 6 eingestellt werden. Vorzugsweise wird auch bei diesem Reaktionsschritt, zusätzlich zu dem in der ersten Stufe zugegebenen Emulgator, kein weiterer Emulgator zudosiert. Eine zu hohe Emulgatorkonzentration kann zu solubilisatfreien Micellen führen, die als Keime für rein organische Latexpartikel fungieren können. Auch dieser Reaktionsschritt kann sowohl kontinuierlich als auch diskontinuierlich durchgeführt werden.

Die Isolierung der erfindungsgemäßen Pfropfcopolymerisate aus der Emulsion kann nach bekannten Verfahren erfolgen. Beispielsweise durch Koagulation der Latices mittels Salzzugabe oder Zugabe von polaren Lösungsmitteln oder durch Sprühtrocknung.

Mit der erfindungsgemäßen Verfahrensweise kann die Partikelgröße nicht nur über den Emulgatorgehalt, sondern auch über die Reaktionstemperatur, den pH-Wert und vor allem über die Zusammensetzung der Pfropfcopolymerisate beeinflußt werden. Die mittlere Partikelgröße kann dabei von 10 bis 300 nm variiert werden. So erhält man, bei hohem Anteil an tertiären Silaneinheiten ($RSiO_{3/2}$), im ersten Verfahrensschritt der Herstellung der siliciumorganischen Pfropfgrundlage a), Partikel mit Teilchengrößen, welche mit den bisher bekannten Verfahren, wenn überhaupt nur unter Einsatz großer Mengen an Emulgator zugänglich waren. Die Einführung einer siliciumorganischen Hülle b) vermittelt eine verbesserte Phasenanbindung der Organopolymerhülle c) an die siliciumorganische Pfropfgrundlage.

Die erfindungsgemäßen Pfropfcopolymerisate eignen sich vor allem zur Anwendung als modifizierte Thermoplasten oder zur Verwendung als Additive zur Polymermodifizierung. Werden die Pfropfcopolymerisate per se als elastomere Thermoplasten eingesetzt sollte der Gehalt an elastomerem Polysiloxan nicht mehr als 40 Gew% betragen. Weiter zeigen oder bewirken die erfindungsgemäßen Pfropfcopolymerisate verbesserte mechanische Eigenschaften wie Witterungs- und Alterungsstabilität, Temperaturstabilität, Kerbschlagzähigkeit und Tieftemperaturzähigkeit.

Die nachfolgenden Beispiele dienen zur weiteren Erläuterung der Erfindung.

Beispiel 1:

Herstellung der Pfropfgrundlage:

3800 g Wasser und 19 g (1.9 Gew% bezogen auf Si-Verbindungen) Dodecylbenzolsulfonsäure wurden auf 85°C erwärmt. Es wurde eine Mischung aus 855 g (2.9 Mol, 74 Mol%) Octamethylcyclotetrasiloxan, 97 g (0.7 Mol, 18 Mol%) Methyltrimethoxysiloxan und 66 g (0.3 Mol, 8 Mol%) Methacryloxypropyltrimethoxysilan zudosiert und 4 Stunden bei 85°C nachgerührt. Nach Abnahme von circa 400 g Destillat erhielt man eine Dispersion mit 21 Gew% Festgehalt und einer Teilchengröße von 111 nm.

Pfropfung:

13050 g der Dispersion wurden in einem 15 l-Reaktor mit Stickstoff inertisiert und auf pH 4 eingestellt. Es wurden 90 g Methylmethacrylat zudosiert und die Polymerisation durch Zugabe von 5.2 g (0.6 Gew% bezogen auf Monomer) $K_2S_2O_8$ und 18 g (2.1 Gew% bezogen auf Monomer) $NaHSO_3$ (37 Gew% in Wasser) gestartet. Innerhalb einer Stunde wurden weitere 780 g Methylmethacrylat zudosiert, anschließend auf 65°C aufgeheizt und innerhalb 3 Stunden auspolymerisiert. Es resultierte ein Latex mit 24 Gew% Polymethylmethacrylat im Pfropfcopolymeren und mit 26.7 Gew% Festgehalt, einer Teilchengröße von 127 nm und einem Polydispersitätsindex von $\sigma_2$ = 0.02.

Beispiel 2:

Herstellung der Pfropfgrundlage:

4035 g Wasser und 8 g (1.8 Gew% bezogen auf Si-Verbindungen) Dodecylbenzolsulfonsäure wurden auf 80°C erwärmt. Es wurde innerhalb 30 Minuten 145 g (0.7 Mol, 39 Mol%) Phenyltrimethoxysilan und anschließend innerhalb 2 Stunden 310 g (1.1 Mol, 61 Mol%) Octamethylcyclotetrasiloxan zudosiert, eine Stunde bei 80°C nachgerührt und anschließend auf das Ausgangsvolumen ausdestilliert.

Pfropfung:

500 g des Hydrosols mit einem Festgehalt von 9.2 % und einer Teilchengröße von 83 nm wurden mit Natriumcarbonatlösung auf pH 5 eingestellt und mit Stickstoff gesättigt. Nach der Zugabe von 7 g frisch gewaschenem Methylmethacrylat wurde durch Zugabe von 0.09 g (0.13 Gew% bezogen auf Monomer) $K_2S_2O_8$ und 0.12 g (0.16 Gew% bezogen auf Monomer) $NaHSO_3$ (37 Gew% in Wasser) gestartet und dann innerhalb 30 Minuten weitere 62 g Methylmethacrylat zudosiert, anschließend auf 65°C aufgeheizt und innerhalb 3 Stunden auspolymerisiert. Es resultierte ein Latex mit 60 Gew% Polymethylmethacrylat im Pfropfcopolymeren und mit 23.1 Gew% Festgehalt, einer Teilchengröße von 106 nm und einem Polydispersitätsindex von $\sigma_2$ = 0.01.

Beispiel 3:

Herstellung der Pfropfgrundlage:

300 g Wasser und 12 g (1.9 Gew% bezogen auf Si-Verbindungen) Dodecylbenzolsulfonsäure wurden auf 90°C erwärmt. Es wurde innerhalb 4 Stunden 576 g (2.0 Mol, 86 Mol%) Octamethylcyclotetrasiloxan, 22.6 g (0.15 Mol, 6 Mol%) Vinyltrimethoxysilan und 24.5 g (0.18 Mol, 8 Mol%) Methyltrimethoxysilan bei 90°C zugetropft und 4 Stunden bei 90°C nachgerührt, wobei entstehendes Methanol abdestilliert wurde.

Pfropfung:

Nach dem Abkühlen wurde mit Natriumcarbonatlösung auf pH 5 eingestellt und mit Stickstoff gesättigt. Nach der Zugabe von 42 g Methylmethacrylat und 93 g Butylacrylat wurde durch Zugabe von 1.75 g (0.13 Gew% bezogen auf Monomer) $K_2S_2O_8$ und 2.15 g (0.16 Gew% bezogen auf Monomer) $NaHSO_3$ (37 Gew% in Wasser) gestartet und dann innerhalb 30 Minuten weitere 376 g Methylmethacrylat und weitere 834 g Butylacrylat zudosiert, anschließend auf 65 °C aufgeheizt und innerhalb 3 Stunden auspolymerisiert. Es resultierte ein Latex mit 43.3 Gew% Festgehalt, einer Teilchengröße von 131 nm und einem Polydispersitätsindex von $\sigma_2$ = 0.03.

Beispiel 4:

Herstellung der Pfropfgrundlage:

In einem 15 l-Reaktor wurden 11830 g Wasser und 59.2 g (1.9 Gew% bezogen auf Si-Verbindung) Dodecylbenzolsulfonsäure vorgelegt und auf 85 °C erwärmt. 302 g (2.2 Mol, 73 Mol%) Methyltrimethoxysilan und 206 g (0.8 Mol, 27 Mol%) Methacryloxypropyltrimethoxysilan wurden unter Rühren zudosiert und es wurde 0.5 Stunden nachgerührt.

Pfropfung der Hülle b):

Anschließend wurden bei 85 °C 2662 g Octamethylcyclotetrasiloxan zudosiert und 4 Stunden nachgerührt. Nach Abnahme von 1500 g Destillat erhielt man eine Dispersion mit einer mittleren Teilchengröße von 145 nm und einem Festgehalt von 21.7 Gew%.

Pfropfung der Hülle c):

6450 g der Dispersion wurden auf pH 4 eingestellt und mit Stickstoff inertisiert. 40 g Methylmethacrylat wurden unter Rühren zugegeben und die Polymerisation mit 2.5 g (0.6 Gew% bezogen auf Monomer) $K_2S_2O_8$ und 8.7 g (2.1 Gew% bezogen auf Monomer) $NaHSO_3$ (37 Gew% in Wasser) gestartet. Nach der Zugabe von weiteren 380 g Methylmethacrylat innerhalb von 0.5 Stunden wurde auf 65 °C erwärmt und innerhalb 3 Stunden auspolymerisiert. Es resultierte ein Latex mit 23 Gew% Polymethylmethacrylat im Pfropfcopolymeren, 26.2 Gew% Festgehalt und einer mittleren Teilchengröße von 155 nm und einem Polydispersitätsindex von 0.04.

Beispiel 5:

Herstellung der Pfropfgrundlage:

Zu 950 g Wasser und 1.0 g (0.9 Gew% bezogen auf Si-Verbindung) Dodecylbenzolsulfonsäure wurden bei 80 °C und innerhalb 2 Stunden 91.8 g (0.7 Mol, 88 Mol%) Methyltrimethoxysilan und 17.2 g (0.1 Mol, 12 Mol%) Tetraethoxysilan zugetropft und 30 Minuten nachgerührt.

Pfropfung der Hülle b):

Anschließend wurde die Temperatur auf 90 °C erhöht und innerhalb 1.5 Stunden 80 g Octamethylcyclotetrasiloxan sowie 18 g 10 %ige Dodecylbenzolsulfonsäure in Wasser zudosiert, 3.5 Stunden nachgerührt und auf Ursprungsvolumen ausdestilliert. Man erhielt ein Hydrosol mit 12.7 % Festgehalt und einer mittleren Teilchengröße von 36 nm.

Pfropfung der Hülle c):

800 g des Hydrosols wurden mit Natriumcarbonatlösung auf pH 5 eingestellt und mit Stickstoff gesättigt. Nach der Zugabe von 3 g frisch gewaschenem Methylmethacrylat wurde durch Zugabe von 0.04 g (0.13 Gew% bezogen auf Monomer) $K_2S_2O_8$ und 0.05 g (0.16 Gew% bezogen auf Monomer) $NaHSO_3$ - (37 Gew% in Wasser) gestartet und dann innerhalb 30 Minuten weitere 27.5 g Methylmethacrylat zudosiert, anschließend auf 65 °C aufgeheizt und innerhalb 3 Stunden auspolymerisiert. Es resultierte ein Latex mit 23 Gew% Polymethylmethacrylat im Pfropfcopolymeren und mit 17 Gew% Festgehalt, einer Teilchengröße von 50 nm und einem Polydispersitätsindex von $\sigma_2$ = 0.02.

Vergleichsbeispiel 1:

500 g eines Silsesquioxansols mit einem Festgehalt von 18.7 Gew% und einer Teilchengröße von 54 nm wurden aus Methyltrimethoxysilan analog dem Verfahren der US-A 3445415 hergestellt und mit Stickstoff inertisiert. Anschließend wurden 2.8 g frisch gereinigtes Methylmethacrylat unter Rühren zudosiert und die Polymerisation durch Zugabe von 0.16 g (0.3 Gew% bezogen auf Monomer) $K_2S_2O_8$ und 0.58 g (1.2 Gew% bezogen auf Monomer) $NaHSO_3$ (37 Gew% in Wasser) gestartet. Innerhalb 30 Minuten wurden weitere 44 g Methylmethacrylat zudosiert. Nach Beendigung der Dosierung wurde auf 65°C erwärmt und innerhalb 3 Stunden auspolymerisiert. Es resultierte ein Latex mit 31 Gew% Polymethylmethacrylat im Pfropfcopolymeren und mit 23 Gew% Festgehalt, einer Teilchengröße von 72 nm und einem Polydispersitätsindex von $\sigma_2 > 1.5$.

Vergleichsbeispiel 2:

540 g (1.8 Mol, 72 Mol%) Octamethylcyclotetrasiloxan, 61.3 g (0.5 Mol, 20 Mol%) Methyltrimethoxysilan, 41.7 g (0.2 Mol, 8 Mol%) Methacryloxypropyltrimethoxysilan, 12 g (1.8 Gew% bezogen auf Si-Verbindung) Dodecylbenzolsulfonsäure und 2400 g Wasser wurden analog der Verfahrensweise nach der US-A 4690986 homogenisiert und 6 Stunden polymerisiert, wobei die Temperatur auf 90°C gesteigert wurde. Es resultierte eine Emulsion mit 19.3 Gew% Festgehalt und einer Teilchengrößenverteilung von 15 bis 170 nm. Nach der Pfropfung mit 280 g Methylmethacrylat, die wie in den obigen Beispielen erfolgte, resultierte eine Emulsion mit 32.6 Gew% Polymethylmethacrylat im Pfropfcopolymeren und mit 26.7 Gew Festgehalt, einer Teilchengrößenverteilung von 15 bis 190 nm und einem Polydispersitätsindex von $\sigma_2 > 1.5$.

Anwendungstechnische Prüfung:

Die in den Beispielen und Vergleichsbeispielen hergestellten Pfropfcopolymerisate wurden mittels Koagulation oder Sprühtrocknung als Pulver gewonnen und auf ihre Tauglichkeit zur Modifizierung von Thermoplasten getestet.

Als Kenngrößen der Modifier-Wirkung wurden die Kerbschlagzähigkeit gemäß der Norm DIN 53453 und die Schlagzähigkeit gemäß der Norm DIN 55753 getestet.

Als Thermoplasten wurden eingesetzt:

1. Zur Testung der Kerbschlagzähigkeit:

Polyvinylchlorid in einer Zusammensetzung aus 100 Teilen PVC (Typ H 68 D, ein Suspensions-PVC der Wacker-Chemie GmbH), 4 Teilen Kreide-Füllstoff (Typ Kreide 95 T der Fa. Omya), 4 Teilen $TiO_2$-Füllstoff (Typ U 220 der Fa. Kronos) und 4 Teilen Ca/Ba-Stabilisator (Typ Stabilox VCZ 2040 der Fa. Ciba-Geigy).

Polymethylmethacrylat (PMMA, Typ Plexiglas 8H der Röhm GmbH)

2. Zur Testung der Schlagzähigkeit:

Styrol-Acrylnitril-Copolymer (SAN, Typ Luran 386 R der BASF AG)

Polystyrol (PS, Typ 143 F der BASF AG)

Bei der Modifizierung von PVC wurde zum Vergleich noch ein Standardmodifier für PVC, nämlich VK 704 eingesetzt. VK 704 ist ein Pfropfcopolymerisat von VC auf Polybutylacrylat (50:50).

Die Ergebnisse der Testung zur Kerbschlagzähigkeit gemäß DIN 53453 sind in Tabelle 1 aufgeführt.

Die Ergebnisse der Testung auf Schlagzähigkeit gemäß DIN 55753 sind in Tabelle 2 aufgeführt.

Bestimmung der Teilchengröße und des Polydispersitätsindex $\sigma_2$ mit dem Transmissions-Elektronenmikroskop:

Mit dem Transmissions-Elektronenmikroskop und der daran angeschlossenen Rechnereinheit werden für die einzelnen Proben die Kurven für die Durchmesserverteilung, die Oberflächenverteilung und die Volumenverteilung ermittelt. Aus der Kurve für die Durchmesserverteilung kann der Mittelwert für die Teilchengröße und dessen Standardabweichung $\sigma$ bestimmt werden. Aus der Kurve für die Oberflächenverteilung erhält man den Mittelwert für das mittlere Volumen $\overline{V}$. Aus der Kurve für die Oberflächenverteilung erhält man den Mittelwert für die mittlere Oberfläche $\overline{A}$ der Teilchen.

Der Polydispersitätsindex $\sigma_2$ läßt sich mit den folgenden Formeln berechnen:

$$\sigma_2 = \sigma / x_{3/2}, \text{ wobei } x_{3/2} = \overline{V} / \overline{A}$$

Nach P. Becher (Encyclopedia of Emulsion Technology Vol. 1, Seite 71, Marcel Dekker New York 1983) liegt dann eine monomodale Teilchengrößenverteilung vor, wenn der nach der obengenannten Formel berechnete Polydispersitätsindex $\sigma_2$ kleiner 0.5 ist.

Die Teilchengröße und der Polydispersitätsindex wurden mit einem Transmissions-Elektronenmikroskop der Fa. Phillips (Phillips CM 12) und einer Auswerteeinheit der Fa. Zeiss (Zeiss TGA 10) bestimmt. Der zu vermessende Latex wurde mit Wasser verdünnt und mit einer 1 $\mu$l Impfschlinge auf ein Standard-Kupfernetz aufgetragen.

TABELLE 1:

| Thermoplast (Teile) | Modifier (Teile) | Kerbschlagzähigkeit $a_k23$ $a_k0$ $a_k-20$ $[kJ/m^2]$ | | |
|---|---|---|---|---|
| 100 T PVC | | 6.7 | | |
| 114 T PVC | 15 T Vbsp.1 | 5.6 | | |
| 114 T PVC | 30 T Vbsp.1 | 3.9 | | |
| 114 T PVC | 12 T VK 704 | 45.6 | 9.5 | 6.0 |
| 114 T PVC | 9 T Bsp.4 | 38.1 | 10.3 | 7.2 |
| 100 T PMMA | | 1.5 | | |
| 100 T PMMA | 15 T Vbsp.1 | 1.1 | | |
| 100 T PMMA | 30 T Vbsp.1 | 0.7 | | |
| 100 T PMMA | 18 T Bsp.4 | 3.1 | | |

TABELLE 2:

| Thermoplast (Teile) | Modifier (Teile) | Schlagzähigkeit $a_k 23 \quad a_k 0$ $[kJ/m^2]$ | |
|---|---|---|---|
| 100 T SAN | | 8.8 | 11.0 |
| 100 T SAN | 10 T Vbsp.2 | 9.7 | 12.3 |
| 114 T SAN | 18 T Bsp.4 | 8.9 | 10.0 |
| 100 T PS | | 3.7 | 3.4 |
| 100 T PS | 18 T Vbsp.2 | 3.0 | 3.4 |
| 100 T PS | 18 T Bsp.4 | 7.5 | 5.7 |

**Patentansprüche**
**Patentansprüche für folgende Vertragsstaaten : BE, DE, FR, GB, IT, NL**

1. Elastomere teilchenförmige Copolymerisate mit Kern-Hülle-Struktur zusammengesetzt aus einem Kern
   a) bestehend aus einem siliciumorganischen Polymer und einer organopolymeren Hülle c) oder zwei Hüllen b) und c), wobei die innere Hülle b) aus einem siliciumorganischen Polymer besteht, dadurch gekennzeichnet, daß das Copolymerisat zusammengesetzt ist aus
   a) 0.05 bis 95 Gew%, bezogen auf das Gesamtgewicht des Copolymerisats, eines Kernpolymeren $(R_2 SiO_{2/2})_x \cdot (RSiO_{3/2})_y \cdot (SiO_{4/2})_z$ mit x = 0 bis 99.5 Mol%, y = 0.5 bis 100 Mol%, z = 0 bis 50 Mol%,
   b) 0 bis 94.5 Gew%, bezogen auf das Gesamtgewicht des Copolymerisats, einer Polydialkylsiloxan-Hülle aus $(R_2 SiO_{2/2})$-Einheiten und
   c) 5 bis 95 Gew%, bezogen auf das Gesamtgewicht des Copolymerisats, einer Hülle aus Organopolymer monoolefinisch ungesättigter Monomere,
   wobei R gleiche oder verschiedene einwertige Alkyl- oder Alkenyl-Reste mit 1 bis 6 C-Atomen, Aryl-Reste oder substituierte Kohlenwasserstoffreste bedeutet,
   und die Teilchen eine Teilchengröße von 10 bis 300 nm und eine monomodale Teilchengrößenverteilung mit einem Polydispersitätsindex von maximal $\sigma_2$ = 0.2 haben.

2. Teilchenförmige Copolymerisate nach Anspruch 1, dadurch gekennzeichnet, daß das Copolymerisat zusammengesetzt ist aus,
   a) 0.05 bis 90 Gew%, bezogen auf das Gesamtgewicht des Copolymerisats, eines Kernpolymeren $(RSiO_{3/2})_y \cdot (SiO_{4/2})_z$ mit y = 50 bis 100 Mol% und z = 0 bis 50 Mol%,
   b) 0.5 bis 94.5 Gew%, bezogen auf das Gesamtgewicht des Copolymerisats, einer Polydialkylsiloxan-Hülle aus $(R_2 SiO_{2/2})$-Einheiten und
   c) 5 bis 95 Gew%, bezogen auf das Gesamtgewicht des Copolymerisats, einer Hülle aus Organopolymer monoolefinisch ungesättigter Monomere.

10

3. Teilchenförmige Copolymerisate nach Anspruch 1, dadurch gekennzeichnet, daß das Copolymerisat zusammengesetzt ist aus,

a) 5 bis 95 Gew%, bezogen auf das Gesamtgewicht des Copolymerisats, eines Kernpolymeren $(R_2SiO_{2/2})_x \bullet (RSiO_{3/2})_y \bullet (SiO_{4/2})_z$ mit x = 10 bis 99.5 Mol%, y = 0.5 bis 95 Mol%, z = 0 bis 30 Mol% und

c) 5 bis 95 Gew%, bezogen auf das Gesamtgewicht des Copolymerisats, einer Hülle aus Organopolymer monoolefinisch ungesättigter Monomere.

4. Verfahren zur Herstellung von teilchenförmigen Copolymerisaten gemäß Anspruch 1, 2 oder 3, dadurch gekennzeichnet, daß

a) die Herstellung der Polysiloxan-Pfropfgrundlage nach dem Emulsionspolymerisationsverfahren durch Zudosieren von 0.05 bis 95 Gew%, bezogen auf das Gesamtgewicht des herzustellenden Pfropfcopolymerisats, eines monomeren Silans des Typs $RSi(OR')_3$ oder Zudosieren eines Gemisches monomerer Silane vom Typ $R_aSi(OR')_{4-a}$, wobei a = 0, 1 oder 2 ist, zu einer bewegten Emulgator/Wasser-Mischung erfolgt, wobei die einzusetzende Menge an Emulgator von 0.5 bis 20.0 Gew%, bezogen auf die eingesetzte Menge an Organosiliciumverbindungen beträgt

b) die Pfropfgrundlage ohne weitere Zugabe von Emulgator mit 0 bis 94.5 Gew% difunktionellen Silanen der allgemeinen Formel $R_2Si(OR')_2$ oder niedermolekularen Siloxane der allgemeinen Formel $(R_2SiO_{2/2})_n$ mit n = 3 bis 8 umgesetzt wird, und

c) die so erhaltene Pfropfgrundlage mit 5 bis 95 Gew% an monoetylenisch ungesättigte Monomeren nach dem Emulsionspolymerisationsverfahren, in Gegenwart von wasserlöslichen oder monomerlöslichen Radikalinitiatoren, ohne weitere Zugabe von Emulgator gepfropft wird, wobei R gleiche oder verschiedene einwertige Alkyl- oder Alkenyl-Reste mit 1 bis 6 C-Atomen, Aryl-Reste oder substituierte Kohlenwasserstoffreste bedeutet.

**Patentansprüche für folgenden Vertragsstaat : ES**

1. Verfahren zur Herstellung von elastomeren teilchenförmigen Copolymerisaten mit Kern-Hülle-Struktur zusammengesetzt aus einem Kern a) bestehend aus einem siliciumorganischen Polymer und einer organopolymeren Hülle c) oder zwei Hüllen b) und c), wobei die innere Hülle b) aus einem siliciumorganischen Polymer besteht, und das Copolymerisat zusammengesetzt ist aus

a) 0.05 bis 95 Gew%, bezogen auf das Gesamtgewicht des Copolymerisats, eines Kernpolymeren $(R_2SiO_{2/2})_x \bullet (RSiO_{3/2})_y \bullet (SiO_{4/2})_z$ mit x = 0 bis 99.5 Mol%, y = 0.5 bis 100 Mol%, z = 0 bis 50 Mol%,

b) 0 bis 94.5 Gew%, bezogen auf das Gesamtgewicht des Copolymerisats, einer Polydialkylsiloxan-Hülle aus $(R_2SiO_{2/2})$-Einheiten und

c) 5 bis 95 Gew%, bezogen auf das Gesamtgewicht des Copolymerisats, einer Hülle aus Organopolymer monoolefinisch ungesättigter Monomere,

wobei R gleiche oder verschiedene einwertige Alkyl- oder Alkenyl-Reste mit 1 bis 6 C-Atomen, Aryl-Reste oder substituierte Kohlenwasserstoffreste bedeutet,

und die Teilchen eine Teilchengröße von 10 bis 300 nm und eine monomodale Teilchengrößenverteilung mit einem Polydispersitätsindex von maximal $\sigma_2$ = 0.2 haben,

**dadurch gekennzeichnet,** daß

a) die Herstellung der Polysiloxan-Pfropfgrundlage nach dem Emulsionspolymerisationsverfahren durch Zudosieren von 0.05 bis 95 Gew%, bezogen auf das Gesamtgewicht des herzustellenden Pfropfcopolymerisats, eines monomeren Silans des Typs $RSi(OR')_3$ oder Zudosieren eines Gemisches monomerer Silane vom Typ $R_aSi(OR')_{4-a}$, wobei a = 0, 1 oder 2 ist, zu einer bewegten Emulgator/Wasser-Mischung erfolgt, wobei die einzusetzende Menge an Emulgator von 0.5 bis 20.0 Gew%, bezogen auf die eingesetzte Menge an Organosiliciumverbindungen beträgt

b) die Pfropfgrundlage ohne weitere Zugabe von Emulgator mit 0 bis 94.5 Gew% difunktionellen Silanen der allgemeinen Formel $R_2Si(OR')_2$ oder niedermolekularen Siloxane der allgemeinen Formel $(R_2SiO_{2/2})_n$ mit n = 3 bis 8 umgesetzt wird, und

c) die so erhaltene Pfropfgrundlage mit 5 bis 95 Gew% an monoetylenisch ungesättigte Monomeren nach dem Emulsionspolymerisationsverfahren, in Gegenwart von wasserlöslichen oder monomerlöslichen Radikalinitiatoren, ohne weitere Zugabe von Emulgator gepfropft wird, wobei R gleiche oder verschiedene einwertige Alkyl- oder Alkenyl-Reste mit 1 bis 6 C-Atomen, Aryl-Reste oder substituierte Kohlenwasserstoffreste bedeutet.

2. Verfahren zur Herstellung von teilchenförmigen Copolymerisaten nach Anspruch 1, dadurch gekennzeichnet, daß das Copolymerisat zusammengesetzt ist aus,

a) 0.05 bis 90 Gew%, bezogen auf das Gesamtgewicht des Copolymerisats, eines Kernpolymeren $(RSiO_{3/2})_y \cdot (SiO_{4/2})_z$ mit y = 50 bis 100 Mol% und z = 0 bis 50 Mol%,

b) 0.5 bis 94.5 Gew%, bezogen auf das Gesamtgewicht des Copolymerisats, einer Polydialkylsiloxan-Hülle aus $(R_2SiO_{2/2})$-Einheiten und

c) 5 bis 95 Gew%, bezogen auf das Gesamtgewicht des Copolymerisats, einer Hülle aus Organopolymer monoolefinisch ungesättigter Monomere.

3. Verfahren zur Herstellung von teilchenförmigen Copolymerisaten nach Anspruch 1, dadurch gekennzeichnet, daß das Copolymerisat zusammengesetzt ist aus,

a) 5 bis 95 Gew%, bezogen auf das Gesamtgewicht des Copolymerisats, eines Kernpolymeren $(R_2SiO_{2/2})_x \cdot (RSiO_{3/2})_y \cdot (SiO_{4/2})_z$ mit x = 10 bis 99.5 Mol%, y = 0.5 bis 95 Mol%, z = 0 bis 30 Mol% und

c) 5 bis 95 Gew%, bezogen auf das Gesamtgewicht des Copolymerisats, einer Hülle aus Organopolymer monoolefinisch ungesättigter Monomere.

**Claims**
**Claims for the following Contracting States : BE, DE, FR, GB, IT, NL**

1. Elastomeric particulate copolymer having a core/shell structure composed of a core a) comprising an organosilicon polymer and an organopolymeric shell c) or two shells b) and c), the inner shell b) comprising an organosilicon polymer, characterized in that the copolymer is composed of

a) from 0.05 to 95% by weight, based on the total weight of the copolymer, of a core polymer $(R_2SiO_{2/2})_x \cdot (RSiO_{3/2})_y \cdot (SiO_{4/2})_z$ where x = 0 to 99.5 mol%, y = 0.5 to 100 mol% and z = 0 to 50 mol%,

b) from 0 to 94.5% by weight, based on the total weight of the copolymer, of a polydialkylsiloxane shell comprising $(R_2SiO_{2/2})$ units and

c) from 5 to 95% by weight, based on the total weight of the copolymer, of a shell comprising an organopolymer of monoolefinically unsaturated monomers,

where R denotes identical or different monovalent alkyl or alkenyl radicals having 1 to 6 carbon atoms, aryl radicals or substituted hydrocarbon radicals,

and the particles have a particle size of from 10 to 300 nm and a monomodal particle size distribution having a maximum polydispersity index $\sigma_2$ = 0.2.

2. Particulate copolymer according to Claim 1, characterized in that it is composed of

a) from 0.05 to 90% by weight, based on the total weight of the copolymer, of a core polymer $(RSiO_{3/2})_y \cdot (SiO_{4/2})_z$ where y = 50 to 100 mol% and z = 0 to 50 mol%,

b) from 0.5 to 94.5% by weight, based on the total weight of the copolymer, of a polydialkylsiloxane shell comprising $(R_2SiO_{2/2})$ units and

c) from 5 to 95% by weight, based on the total weight of the copolymer, of a shell comprising an organopolymer of monoolefinically unsaturated monomers.

3. Particulate copolymer according to Claim 1, characterized in that it is composed of

a) from 5 to 95% by weight, based on the total weight of the copolymer, of a core polymer $(R_2SiO_{2/2})_x \cdot (RSiO_{3/2})_y \cdot (SiO_{4/2})_z$ where x = 10 to 99.5 mol%, y = 0.5 to 95 mol% and z = 0 to 30 mol%, and

c) from 5 to 95% by weight, based on the total weight of the copolymer, of a shell comprising an organopolymer of monoolefinically unsaturated monomers.

4. Process for the preparation of a particulate copolymer according to Claim 1, 2 or 3, characterized in that

a) the preparation of the polysiloxane graft base is carried out by the emulsion polymerization process by metering from 0.05 to 95% by weight, based on the total weight of the graft copolymer to be prepared, of a monomeric silane of the $RSi(OR')_3$ type or a mixture of monomeric silanes of the $R_aSi(OR')_{4-a}$ type where a = 0, 1 or 2, into an agitated emulsifier/water mixture, the amount of emulsifier to be employed being from 0.5 to 20.0% by weight, based on the amount of organosilicon compounds employed,

EP 0 492 376 B1

b) the graft base, without further addition of emulsifier, is reacted with from 0 to 94.5% by weight of difunctional silanes of the general formula $R_2Si(OR')_2$ or low-molecular-weight siloxanes of the general formula $(R_2SiO_{2/2})_n$ where n = 3 to 8, and

c) the resultant graft base is grafted with from 5 to 95% by weight of monoethylenically unsaturated monomers by the emulsion polymerization process, in the presence of water-soluble or monomer-soluble free-radical initiators, without further addition of emulsifier,

where R denotes identical or different monovalent alkyl or alkenyl radicals having 1 to 6 carbon atoms, aryl radicals or substituted hydrocarbon radicals.

**Claims for the following Contracting State : ES**

1. Process for the preparation of an elastomeric particulate copolymer having a core/shell structure composed of a core a) comprising an organosilicon polymer and an organopolymeric shell c) or two shells b) and c), the inner shell b) comprising an organosilicon polymer, where the copolymer is composed of

   a) from 0.05 to 95% by weight, based on the total weight of the copolymer, of a core polymer $(R_2SiO_{2/2})_x \bullet (RSiO_{3/2})_y \bullet (SiO_{4/2})_z$ where x = 0 to 99.5 mol%, y = 0.5 to 100 mol% and z = 0 to 50 mol%,

   b) from 0 to 94.5% by weight, based on the total weight of the copolymer, of a polydialkylsiloxane shell comprising $(R_2SiO_{2/2})$ units and

   c) from 5 to 95% by weight, based on the total weight of the copolymer, of a shell comprising an organopolymer of monoolefinically unsaturated monomers,

   where R denotes identical or different monovalent alkyl or alkenyl radicals having 1 to 6 carbon atoms, aryl radicals or substituted hydrocarbon radicals,

   and the particles have a particle size of from 10 to 300 nm and a monomodal particle size distribution having a maximum polydispersity index $\sigma_2$ = 0.2, characterized in that

   a) the preparation of the polysiloxane graft base is carried out by the emulsion polymerization process by metering from 0.05 to 95% by weight, based on the total weight of the graft copolymer to be prepared, of a monomeric silane of the $RSi(OR')_3$ type or a mixture of monomeric silanes of the $R_aSi(OR')_{4-a}$ type where a = 0, 1 or 2, into an agitated emulsifier/water mixture, the amount of emulsifier to be employed being from 0.5 to 20.0% by weight, based on the amount of organosilicon compounds employed,

   b) the graft base, without further addition of emulsifier, is reacted with from 0 to 94.5% by weight of difunctional silanes of the general formula $R_2Si(OR')_2$ or low-molecular-weight siloxanes of the general formula $(R_2SiO_{2/2})_n$ where n = 3 to 8, and

   c) the resultant graft base is grafted with from 5 to 95% by weight of monoethylenically unsaturated monomers by the emulsion polymerization process, in the presence of water-soluble or monomer-soluble free-radical initiators, without further addition of emulsifier,

   where R denotes identical or different monovalent alkyl or alkenyl radicals having 1 to 6 carbon atoms, aryl radicals or substituted hydrocarbon radicals.

2. Process for the preparation of a particulate copolymer according to Claim 1, characterized in that it is composed of

   a) from 0.05 to 90% by weight, based on the total weight of the copolymer, of a core polymer $(RSiO_{3/2})_y \bullet (SiO_{4/2})_z$ where y = 50 to 100 mol% and z = 0 to 50 mol%,

   b) from 0.5 to 94.5% by weight, based on the total weight of the copolymer, of a polydialkylsiloxane shell comprising $(R_2SiO_{2/2})$ units and

   c) from 5 to 95% by weight, based on the total weight of the copolymer, of a shell comprising an organopolymer of monoolefinically unsaturated monomers.

3. Process for the preparation of a particulate copolymer according to Claim 1, characterized in that it is composed of

   a) from 5 to 95% by weight, based on the total weight of the copolymer, of a core polymer $(R_2SiO_{2/2})_x \bullet (RSiO_{3/2})_y \bullet (SiO_{4/2})_z$ where x = 10 to 99.5 mol%, y = 0.5 to 95 mol% and z = 0 to 30 mol%, and

   c) from 5 to 95% by weight, based on the total weight of the copolymer, of a shell comprising an organopolymer of monoolefinically unsaturated monomers.

**Revendications**

**Revendications pour les Etats contractants suivants : BE, DE, FR, GB, IT, NL**

1.  Copolymères élastomères sous forme de particules ayant une structure noyau-enveloppe composée d'un noyau a) qui se compose d'un polymère organosilicié et d'une enveloppe polymère organique c) ou de deux enveloppes b) et c), l'enveloppe intérieure b) étant composée d'un polymère organosilicié, caractérisés en ce que le copolymère se compose :

    a) de 0,05 à 95 % en poids, par rapport au poids total du copolymère, d'un polymère du noyau $(R_2SiO_{2/2})_x \bullet (RSiO_{3/2})_y \bullet (SiO_{4/2})_z$, avec x = 0 à 99,5 moles %, y = 0,5 à 100 moles %, z = 0 à 50 moles %,

    b) de 0 à 94,5 % en poids, par rapport au poids total du copolymère, et d'une enveloppe de polydialkylsiloxane composé d'unités $(R_2SiO_{2/2})$ et

    c) de 5 à 95 % en poids, par rapport au poids total du copolymère, d'une enveloppe en polymère organique composé de monomères à insaturation mono-oléfinique,

    R représentant des radicaux alkyle ou alcényle monovalents identiques ou différents, comportant de 1 à 6 atomes de carbone, des radicaux aryle ou des radicaux hydrocarbonés substitués,

    et les particules ayant une granulométrie de 10 à 300 nm et une répartition granulométrique monomodale avec un indice de polydispersité d'au maximum de $\sigma_2$ = 0,2.

2.  Copolymères sous forme de particules selon la revendication 1, caractérisés en ce que le copolymère se compose :

    a) de 0,05 à 90 % en poids, par rapport au poids total du copolymère, d'un polymère du noyau $(RSiO_{3/2})_y \bullet (SiO_{4/2})_z$, avec y = 50 à 100 moles % et z = 0 à 50 moles %,

    b) de 0,5 à 94,5 % en poids, par rapport au poids total du copolymère, d'une enveloppe de polydialkylsiloxane composé d'unités $(R_2SiO_{2/2})$ et

    c) de 5 à 95 % en poids, par rapport au poids total du copolymère, d'une enveloppe en polymère organique composé de monomères à insaturation éthylénique.

3.  Copolymères sous forme de particules selon la revendication 1, caractérisés en ce que le copolymère se compose :

    a) de 5 à 95 % en poids, par rapport au poids total du copolymère, d'un polymère du noyau $(R_2SiO_{2/2})_x \bullet (RSiO_{3/2})_y \bullet (SiO_{4/2})_z$, avec x = 10 à 99,5 moles %, y = 0,5 à 95 moles %, z = 0 à 30 moles %,

    c) de 5 à 95 % en poids, par rapport au poids total du copolymère, d'une enveloppe en polymère organique composé de monomères à insaturation éthylénique.

4.  Procédé pour la préparation de copolymères sous forme de particules selon la revendication 1, 2 ou 3, caractérisé en ce que

    a) on effectue la préparation de la base de greffage polysiloxane selon le procédé de polymérisation en émulsion par addition progressive de 0,05 à 95 % en poids, par rapport au poids total du polymère greffé à préparer, d'un silane monomère de type $RSi(OR')_3$ ou par addition progressive d'un mélange de silanes monomères de type $R_aSi(OR')_{4-a}$, a = 0, 1 ou 2, à un mélange agité d'émulsifiant/eau, la quantité d'émulsifiant à utiliser étant de 0,5 à 20.0 % en poids, par rapport à la quantité utilisée de composés organosiliciés ;

    b) on fait réagir la base de greffage sans addition supplémentaire d'émulsifiant avec 0 à 94,5 % en poids de silanes bifonctionnels de formule générale $R_2Si(OR')_2$ ou de siloxanes de bas poids moléculaire de formule générale $(R_2SiO_{2/2})_n$ avec n = 3 à 8, et

    c) on greffe la base de greffage ainsi obtenue ayant une teneur de 5 à 95 % en poids en monomères à insaturation éthylénique, après le procédé de polymérisation en émulsion, en présence d'amorceurs radicalaires hydrosolubles ou solubles dans les monomères, sans addition supplémentaire d'émusifiant, R représentant des radicaux alkyle ou alcényle monovalents identiques ou différents comportant de 1 à 6 atomes de carbone, des radicaux aryle ou des radicaux hydrocarbonés substitués.

**Revendications pour l'Etat contractant suivant : ES**

1.  Procédé pour la préparation de copolymères élastomères sous forme de particules ayant une structure noyau-enveloppe composée d'un noyau a) qui se compose d'un polymère organosilicié et d'une enveloppe polymère organique c) ou de deux enveloppes b) et c), l'enveloppe intérieure b) étant composée d'un polymère organosilicié et le copolymère se compose :

a) de 0,05 à 95 % en poids, par rapport au poids total du copolymère, d'un polymère du noyau $(R_2SiO_{2/2})_x \bullet (RSiO_{3/2})_y \bullet (SiO_{4/2})_z$, avec x = 0 à 99,5 moles %, y = 0,5 à 100 moles %, z = 0 à 50 moles %,

b) de 0 à 94,5 % en poids, par rapport au poids total du copolymère, et d'une enveloppe de polydialkylsiloxane composé d'unités $(R_2SiO_{2/2})$ et

c) de 5 à 95 % en poids, par rapport au poids total du copolymère, d'une enveloppe en polymère organique composé de monomères à insaturation mono-oléfinique,

R représentant des radicaux alkyle ou alcényle monovalents identiques ou différents, comportant de 1 à 6 atomes de carbone, des radicaux aryle ou des radicaux hydrocarbonés substitués,

et les particules ayant une granulométrie de 10 à 300 nm et une répartition granulométrique monomodale avec un indice de polydispersité d'au maximum de $\sigma_2$ = 0,2, caractérisés en ce que

a) on prépare la base de greffage polysiloxane selon le procédé de polymérisation en émulsion par addition progressive de 0,05 à 95 % en poids, par rapport au poids total du polymère greffé à préparer, d'un silane monomère de type $RSi(OR')_3$ ou par addition progressive d'un mélange de silanes monomères de type $R_aSi(OR')_{4-a}$, a = 0, 1 ou 2, à un mélange agité d'émulsifiant/eau, la quantité d'émulsifiant à utiliser étant de 0,5 à 20.0 % en poids, par rapport à la quantité utilisée de composés organosiliciés ;

b) on fait réagir la base de greffage sans addition supplémentaire d'émulsifiant avec 0 à 94,5 % en poids de silanes bifonctionnels de formule générale $R_2Si(OR')_2$ ou de siloxanes de bas poids moléculaire de formule générale $(R_2SiO_{2/2})_n$, avec n = 3 à 8, et

c) on greffe la base de greffage ainsi obtenue ayant une teneur de 5 à 95 % en poids en monomères à insaturation éthylénique, après le procédé de polymérisation en émulsion, en présence d'amorceurs radicalaires hydrosolubles ou solubles dans les monomères, sans addition supplémentaire d'émusifiant, R représentant des radicaux alkyle ou alcényle monovalents identiques ou différents, comportant de 1 à 6 atomes de carbone, des radicaux aryle ou des radicaux hydrocarbonés substitués.

2. Procédé pour la préparation de copolymères sous forme de particules selon la revendication 1, caractérisés en ce que le copolymère se compose :

a) de 0,05 à 90 % en poids, par rapport au poids total du copolymère, d'un polymère du noyau $(RSiO_{3/2})_y \bullet (SiO_{4/2})_z$, avec y = 50 à 100 moles % et z = 0 à 50 moles %,

b) de 0,5 à 94,5 % en poids, par rapport au poids total du copolymère, d'une enveloppe en polydialkylsiloxane composée d'unités $(R_2SiO_{2/2})$ et

c) de 5 à 95 % en poids, par rapport au poids total du copolymère, d'une enveloppe en polymère organique composé de monomères à insaturation éthylénique.

3. Procédé pour la préparation de copolymères particulaires selon la revendication 1, caractérisé en ce que le copolymère se compose :

a) de 5 à 95 % en poids, par rapport au poids total du copolymère, d'un polymère du noyau $(R_2SiO_{2/2})_x \bullet (RSiO_{3/2})_y \bullet (SiO_{4/2})_z$, avec x = 10 à 99,5 moles %, y = 0,5 à 95 moles %, z = 0 à 30 moles %, et

c) de 5 à 95 % en poids, par rapport au poids total du copolymère, d'une enveloppe en polymère organique composé de monomères à insaturation éthylénique.